# EUROPÄISCHE PATENTSCHRIFT

(11) **EP 2 588 731 B1**
(45) Veröffentlichungstag und Bekanntmachung des Hinweises auf die Patenterteilung: **25.11.2015**
(21) Anmeldenummer: 11733605.7
(22) Anmeldetag: 28.06.2011
(51) Int. Cl.: F02C 6/12, F01D 25/16, F02C 7/06

(54) **Verschraubbarer Lagergehäusedeckel für eine Ladeeinrichtung**
Screwable bearing housing cover for a supercharging device
Couvercle de carter de palier vissable pour un dispositif de charge

(30) Priorität: 09.05.2011 DE 102011075517; 29.06.2010 DE 202010017275 U
(43) Veröffentlichungstag der Anmeldung: 08.05.2013
(60) Teilanmeldung: 15185238.1
(73) Patentinhaber: Bosch Mahle Turbo Systems GmbH & Co. KG, 70376 Stuttgart (DE)
(72) Erfinder: HOLZSCHUH, Christian, 70736 Fellbach (DE); SCHNELL, Markus, 70329 Stuttgart (DE); FIEDLER, Max, 70806 Kornwestheim (DE)
(74) Vertreter: BRP Renaud & Partner mbB Rechtsanwälte Patentanwälte Steuerberater
(86) Internationale Anmeldenummer: PCT/EP2011/060794
(87) Internationale Veröffentlichungsnummer: WO 2012/000980

(56) Entgegenhaltungen:
- EP-A1- 1 398 463
- CN-Y- 200 971 871
- CN-Y- 201 372 816
- DE-A1- 3 616 697
- DE-A1- 10 036 756
- DE-A1- 10 321 584
- DE-B- 1 217 153
- GB-A- 823 581
- GB-A- 2 112 081

## Beschreibung

Die vorliegende Erfindung betrifft ein Lagergehäuse für ein Lagergehäuse einer Ladeeinrichtung, insbesondere für einen Abgasturbolader eines Kraftfahrzeugs. Des Weiteren ist ebenfalls Gegenstand der Erfindung ein Abgasturbolader mit einem derartigen Lagergehäuse.

Aus der WO 2010/002717 A2 ist ein gattungsgemäßes Lagergehäuse für einen Abgasturbolader bekannt. Verdichterseitig weist das Lagergehäuse eine Öffnung auf, die mit einem Lagergehäusedeckel verschlossen wird. Somit kann durch den Lagergehäusedeckel der Verdichtergehäuseinnenraum gegen den Lagergehäuseinnenraum abgegrenzt bzw. gasdicht verschlossen werden. Der Lagergehäusedeckel ist mit einem Bajonettverschluss an dem Lagergehäuse fixierbar. Der Lagergehäusedeckel ist des Weiteren derart ausgebildet, dass er in Einbaulage die Wellendichtringe bzw. Kolbenringe lagert.

Aus der GB 823 581 ist eine Ladeeinrichtung bekannt, die verdichterseitig durch einen Gehäusedeckel verschlossen wird. Der Gehäusedeckel weist hierbei ein Außengewinde auf und kann dementsprechend in ein Innengewinde eines Gehäuses der Ladeeinrichtung eingeschraubt werden.

Die EP 1 398 463 A1 beschreibt eine Ladeeinrichtung bzw. eine variable Turbinen- oder Verdichtergeometrie für eine Ladeeinrichtung, bei der unterschiedliche Schraubverbindungen durch eine Sicherung ergänzt sind bzw. eine derartige Sicherung aufweisen.

Aus der DE 100 36 756 A1 ist eine Zylinderkopfdichtung für den Automobilbereich bekannt, die mittels Siebdruckverfahren aufgebracht ist.

Üblicherweise wird ein Lagergehäusedeckel derzeit mit einer umlaufenden Ringnut für einen Dichtkörper, wie z. B. einen O-Ring, ausgeführt. Die Herstellung des Lagergehäusedeckels benötigt damit mehrere Bearbeitungsschritte und ist unter anderem deshalb nur konstruktiv aufwändig und teuer zu bewerkstelligen.

Die vorliegende Erfindung beschäftigt sich nun mit dem Problem, für einen Lagergehäusedeckel und ein Lagergehäuse eine verbesserte oder zumindest eine alternative Ausführungsform anzugeben, die sich insbesondere durch eine einfache Montage und eine reduzierte Teilevielfalt auszeichnet.

Erfindungsgemäß wird dieses Problem durch die Gegenstände der unabhängigen Ansprüche gelöst. Vorteilhafte Ausführungsformen sind Gegenstand der abhängigen Ansprüche.

Die vorliegende Erfindung beruht auf dem allgemeinen Gedanken, bei einem Lagergehäuse einer Ladeeinrichtung, einen das Lagergehäuse abschließenden Lagergehäusedeckel über eine Schraubverbindung am eigentlichen Lagergehäuse festzulegen, wobei der Lagergehäusedeckel selbst ein Schraubelement bildet. Unter dem Begriff Schraubverbindung werden somit nicht zusätzliche Schrauben verstanden, über welche der Lagergehäusedeckel am Lagergehäuse festgeschraubt wird, sondern der Lagergehäusedeckel selbst ist als Schraube ausgebildet und kann dadurch durch eine Drehbewegung am Lagergehäuse festgeschraubt und dadurch fixiert werden. Hierzu weist der erfindungsgemäße Lagergehäusedeckel ein erstes Gewinde auf, wogegen das erfindungsgemäße Lagergehäuse ein komplementär dazu ausgebildetes zweites Gewinde aufweist, so dass der Lagergehäusedeckel am Lagergehäuse durch eine einfache Drehbewegung angeschraubt werden kann. Hierdurch ist insbesondere der Wegfall von zusätzlichen Befestigungsmitteln, wie beispielsweise Schrauben, möglich, eben so wie der Wegfall von zusätzlichen Dichtmittel, wie beispielsweise O-Ringdichtungen. Durch den Wegfall dieser zusätzlichen Teile kann die Teilevielfalt erheblich reduziert und die Montage zusätzlich vereinfacht werden. Zudem sind/ist das erste Gewinde und/oder das zweite Gewinde selbstsichernd ausgebildet, wodurch ein unbeabsichtigtes Lösen des Lagergehäusedeckels vom Lagergehäuse vermieden oder zumindest erschwert werden kann. Um darüber hinaus eine möglichst dichte Anordnung des Lagergehäusedeckels am Lagergehäuse zu erreichen, weist der Lagergehäusedeckels eine mittels Siebdruckverfahrens aufgespritzte Dichtung auf, über welche sich der Lagergehäusedeckel dicht an eine entsprechende Anlagekontur des Lagergehäuses anlegt. Durch diese aufgespritzte und dadurch einfach herzustellende Dichtung zusammen mit dem selbstsichernden Außengewinde kann ein einfacher und zugleich zuverlässig dichter Verschluss des Lagergehäuses durch den Lagergehäusedeckel erzielt werden.

Bei einer vorteilhaften Weiterbildung der erfindungsgemäßen Lösung, ist das erste Gewinde ein Außengewinde und das zweite Gewinde ein komplementär dazu ausgebildetes Innengewinde, wobei das Außengewinde zusätzlich selbstsichernd ausgebildet sein kann. Mit dieser Ausführungsform wird ein einfaches Einschrauben des Lagergehäusedeckels in das Innengewinde am Lagergehäuse ermöglicht, wobei zum vereinfachten Einschrauben beispielsweise zusätzlich und rein optional ein Gleitmittel verwendet werden kann.

Bei einer vorteilhaften Weiterbildung der erfindungsgemäßen Lösung, ist der Lagergehäusedeckel mittels eines Umformverfahrens, insbesondere mittels Schmieden oder Kaltfließpressen, hergestellt. Derartige Fließpressverfahren gehören üblicherweise zu den Druckumformverfahren, bei welchen der zu verformende Werkstoff unter Einwirkung eines hohen Drucks zum Fließen gebracht wird. Das Umformen erfolgt meist bei Raumtemperatur, weshalb man in diesem Fall vom Kaltfließpressen spricht. Derartig hergestellte Bauteile und im vorliegenden Fall Lagergehäusedeckel zeichnet sich durch eine besonders hohe Maßgenauigkeit wie eine hohe Oberflächengüte aus. Von besonderem Vorteil ist dabei, dass derartig kaltfließgepresste Bauteile besonders kostengünstig, trotzdem qualitativ hochwertig hergestellt werden können. Beim Schmieden hingegen wird das herzustellende Werkstück zwischen zwei Werkzeugen spanlos druckumgeformt und zwar üblicherweise oberhalb oder unterhalb der Rekristallisationstemperatur, weshalb man dann vom Warm- oder Kaltumformen spricht. Vorteile sind insbesondere ein geringer Materialverlust im Gegensatz zu spanenden Bearbeitungen und dadurch eine wirtschaftliche Herstellbarkeit.

Zweckmäßig ist der Lagergehäusedeckel aus Stahl ausgebildet und weist einen Korrosionsschutz in Form einer Nitrocarburierung oder einer Brünierung auf. Die Nitrocarburierung ist eine mit Kohlenstoffaufnahme verbundene Gasnitrierung, wodurch üblicherweise Oberflächen gehärtet werden. Das Brünieren hingegen dient dem Bilden einer Schutzschicht auf eisenhaltigen Oberflächen, um dadurch die Korrosionsgefahr zu reduzieren. Beide Verfahren, das heißt sowohl das Nitrocarburieren als auch das Brünieren erhöhen die Korrosionsbeständigkeit erheblich, wodurch insbesondere qualitativ hochwertige Werkstücke aus Stahl veredelt werden können.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch:
- Fig. 1: eine Schnittdarstellung durch ein erfindungsgemäßes Lagergehäuse mit einem darin eingeschraubten Lagergehäusedeckel,
- Fig. 2: eine Ansicht auf eine mögliche Ausführungsform des Lagergehäusedeckels.

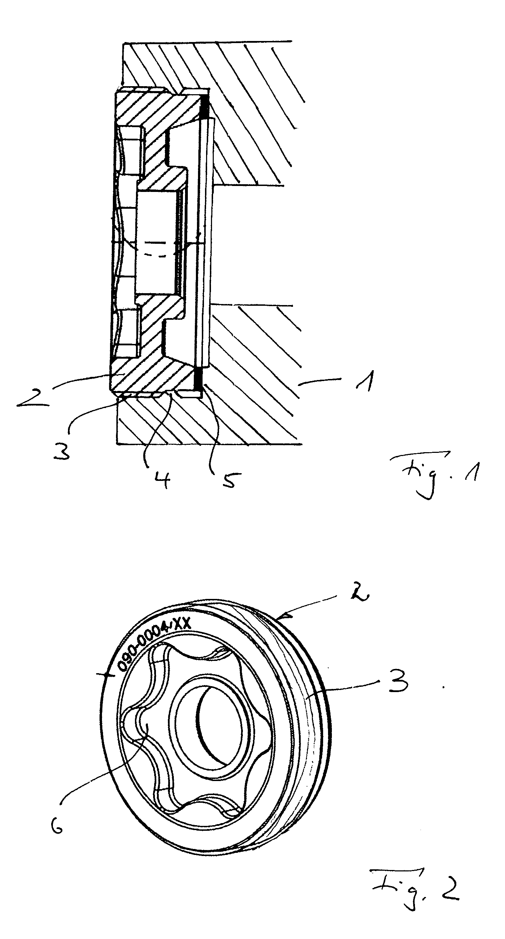

Entsprechend der Fig. 1, weist ein Lagergehäuse 1 einer im Übrigen nicht dargestellten Ladeeinrichtung, beispielsweise eines Abgasturboladers eines Kraftfahrzeuges, einen aus Metall ausgebildeten Lagergehäusedeckel 2 auf. Um den Lagergehäusedeckel 2 auf möglichst einfache Weise am Lagergehäuse 1 befestigen und dadurch auch insbesondere das Lagergehäuse 1 in Axialrichtung abdichten zu können, ist erfindungsgemäß am Lagergehäusedeckel 2 ein erstes Gewinde 3 und am Lagergehäuse 1 ein komplementär dazu ausgebildetes zweites Gewinde 4 vorgesehen, so dass der Lagergehäusedeckel 2 am Lagergehäuse 1 durch eine einfache Drehbewegung angeschraubt werden kann. Das erste Gewinde 3 am Lagergehäusedeckel 2 ist dabei als Außengewinde ausgebildet, wogegen das zweite Gewinde 4 am Lagergehäuse 1 als komplementär dazu ausgebildetes Innengewinde ausgestaltet ist, oder umgekehrt. Zudem kann das Außengewinde und/oder das Innengewinde, das heißt das erste Gewinde 3 und/oder das zweite Gewinde 4 selbstsichernd ausgebildet sein, wodurch ein unbeabsichtigtes Lösen des Lagergehäusedeckels 2 vom Lagergehäuse 1 vermieden oder zumindest erschwert werden kann.

Der Lagergehäusedeckel 2 ist dabei aus Aluminium, insbesondere aus Aluminiumdruckguss oder aus Stahl ausgebildet, wobei im letzten Fall der Lagergehäusedeckel 2 zusätzlich einen Korrosionsschutz in Form einer Nitrocarburierung oder einer Brünierung aufweisen kann. Um den Lagergehäusedeckel 2 möglichst kostengünstig und dennoch qualitativ hochwertig herstellen zu können, wird dieser vorzugsweise mittels eines Umformverfahrens, insbesondere mittels Schmieden oder Kaltfließpressen hergestellt.

Zur Abdichtung des Lagergehäusedeckels 2 gegenüber dem Lagergehäuse 1 kann darüber hinaus eine Dichtung 5 vorgesehen sein, die beispielsweise mittels Siebdruckverfahren auf eine Stirnfläche des Lagergehäusedeckels 2 aufgespritzt wird. Zusätzlich oder alternativ kann eine derartige Dichtung 5 selbstverständlich auch an einer entsprechenden Stelle des Lagergehäuses 1 angebracht bzw. angespritzt werden. Selbstverständlich ist auch die Verwendung herkömmlicher 0-Ringdichtungen denkbar.

Um den Lagergehäusedeckel 2 leicht in das Lagergehäuse 1 einschrauben zu können, kann der Lagergehäusedeckel 2 eine Angriffskontur 6, beispielsweise einen Torx oder eine Inbus aufweisen (vgl. insbesondere Fig. 2).

Mit dem erfindungsgemäßen, einschraubbaren Lagergehäusedeckel 2 kann insbesondere die Teilevielfalt reduziert werden, da beispielsweise separate Befestigungselemente wie beispielsweise Schrauben entfallen können. Gleichzeitig wird zudem die Montage des Lagergehäusedeckels 2 am Lagergehäuse 1 vereinfacht. Das An-/Einschrauben des Lagergehäusedeckels 2 am/im Lagergehäuse 1 kann mittels eines entsprechenden Drehwerkzeugs, beispielsweise einer Nuss oder eines Torx-Schlüssels erfolgen, mit welchem der Lagergehäusedeckel 2 in das Lagergehäuse 1 gegen ein Axiallager, an welchem beispielsweise auch die Dichtung 5 aufgebracht ist, geschraubt wird. Um das Einschrauben des Lagergehäusedeckels 2 vereinfachen zu können, kann der Lagergehäusedeckel 2 insbesondere im Bereich seines ersten Gewindes 3 und/oder das Lagergehäuse 1 im Bereich seines zweiten Gewindes 4 mit einem entsprechenden Gleitmittel beschichtet werden. Hierdurch lassen sich nicht nur der Montageprozess, das heißt beispielsweise das Einschrauben vereinfachen, sondern darüber hinaus Gewindebeschädigungen beim Verschrauben vermeiden.

Mit dem erfindungsgemäßen Lagergehäusedeckel 2 und dem zugehörigen Lagergehäuse 1 lässt sich somit die Montage desselben am Lagergehäuse 1 vereinfachen und zudem die Teilevielfalt reduzieren, wodurch insbesondere Lager und Logistikkosten reduziert werden können.

## Patentansprüche

1. Lagergehäuse (1) eines Abgasturboladers eines Kraftfahrzeugs, mit einem aus Metall ausgebildeten Lagergehäusedeckel (2), wobei am Lagergehäusedeckel (2) ein erstes Gewinde (3) und am Lagergehäuse (1) ein komplementär dazu ausgebildetes zweites Gewinde (4) vorgesehen ist, so dass der Lagergehäusedeckel (2) am Lagergehäuse (1) durch eine Drehbewegung anschraub- und fixierbar ist,
**dadurch gekennzeichnet,**
- **dass** der Lagergehäusedeckel (2) eine Dichtung (5) aufweist, die mittels Siebdruckverfahren aufgespritzt ist,
- **dass** das erste Gewinde (3) und/oder das zweite Gewinde (4) selbstsichernd ausgebildet sind/ist.

2. Lagergehäuse nach Anspruch 1,
**dadurch gekennzeichnet,**
**dass** das erste Gewinde (3) ein Außengewinde und das zweite Gewinde (4) ein komplementär dazu ausgebildetes Innengewinde ist.

3. Lagergehäuse nach einem der vorhergehenden Ansprüche,
**dadurch gekennzeichnet,**
**dass** der Lagergehäusedeckel (2) aus Aluminium oder aus Stahl ausgebildet ist.

4. Lagergehäuse nach einem der Ansprüche 1 bis 3,
**dadurch gekennzeichnet,**
**dass** der Lagergehäusedeckel (2) eine Angriffskontur (6) aufweist, die als Torx oder als Inbus ausgebildet ist.

5. Lagergehäuse nach einem der Ansprüche 1 bis 4,
**dadurch gekennzeichnet,**
**dass** der Lagergehäusedeckel (2) aus Stahl ausgebildet ist und einen Korrosionsschutz in Form einer Nitrocarburierung oder einer Brünierung aufweist.

6. Lagergehäuse nach einem der Ansprüche 1 bis 5,
**dadurch gekennzeichnet,**
**dass** der Lagergehäusedeckel (2) mittels Schmieden oder Kaltfließpressen hergestellt ist.

7. Lagergehäusedeckel eines Lagergehäuse nach einem der Ansprüche 1 bis 6, mit einem als Außengewinde ausgebildeten ersten Gewinde (3).

8. Abgasturbolader mit einem Lagergehäuse (1) nach einem der Ansprüche 1 bis 6.

## Claims

1. Bearing housing (1) of an exhaust-gas turbocharger of a motor vehicle, comprising a bearing housing cover (2) made of metal, wherein a first thread (3) is provided on the bearing housing cover (2) and a second thread (4) of complementary configuration is provided on the bearing housing (1), so that the bearing housing cover (2) can be screwed on to and attached to the bearing housing (1) by a rotary movement, **characterised in that**
- the bearing housing cover (2) comprises a seal (5) spray-applied by a screen printing method
- the first thread (3) and/or the second thread (4) is or are of a self-locking design.

2. Bearing housing according to claim 1, **characterised in that** the first thread (3) is an external thread and the second thread (4) is an internal thread of complementary configuration thereto.

3. Bearing housing according to one of the preceding claims, **characterised in that** the bearing housing cover (2) is made of aluminium or steel.

4. Bearing housing according to one of claims 1 to 3, **characterised in that** the bearing housing cover (2) has a driving profile (6) in the form of a torx or an Allen.

5. Bearing housing according to one of claims 1 to 4, **characterised in that** the bearing housing cover (2) is made of steel and has corrosion protection in the form of a nitrocarburising or a burnishing.

6. Bearing housing according to one of claims 1 to 5, **characterised in that** the bearing housing cover (2) is produced by forging or cold extruding.

7. Bearing housing cover of a bearing housing according to one of claims 1 to 6, having a first thread (3) embodied as an external thread.

8. Exhaust-gas turbocharger having a bearing housing (1) according to one of claims 1 to 6.

## Revendications

1. Logement de palier (1) d'un turbocompresseur à gaz d'échappement d'un véhicule automobile, comprenant un couvercle de logement de palier (2) formé de métal, dans lequel il est prévu sur le couvercle de logement de palier (2) un premier filet (3) et sur le carter de palier (1) un second filet (4) formé de manière complémentaire au premier de sorte que le couvercle de logement de palier (2) puisse être vissé et fixé sur le logement de palier (1) par un mouvement rotatif, **caractérisé en ce que** :
- le couvercle de logement de palier (2) présente un joint étanche (5) qui est pulvérisé au moyen d'un procédé de sérigraphie et
- le premier filet (3) et/ou le second filet (4) est ou sont formés en mode autobloquant.

2. Logement de palier selon la revendication 1,
**caractérisé en ce que** :
le premier filet (3) est un filet externe et le second filet (4) est un filet interne conformé de manière complémentaire au premier.

3. Logement de palier selon l'une quelconque des revendications précédentes, **caractérisé en ce que** :
le couvercle de logement de palier (2) est formé d'aluminium ou d'acier.

4. Logement de palier selon l'une quelconque des revendications 1 à 3,
**caractérisé en ce que** :
le couvercle de logement de palier (2) présente un contour d'application (6) qui est conformé en système de type Torx ou à six pans creux.

5. Logement de palier selon l'une quelconque des revendications 1 à 4,
**caractérisé en ce que** :
le couvercle de logement de palier (2) est formé d'acier et présente une protection contre la corrosion sous la forme d'une nitrocarburation ou d'un brunissage galvanique.

6. Logement de palier selon l'une quelconque des revendications 1 à 5,
**caractérisé en ce que** :
le couvercle de logement de palier (2) est fabriqué par forgeage ou matriçage à froid.

7. Couvercle de logement de palier d'un carter de palier selon l'une quelconque des revendications 1 à 6, comprenant un premier filet (3) conformé en filet externe.

8. Turbocompresseur à gaz d'échappement ayant un logement de palier (1) selon l'une quelconque des revendications 1 à 6.
